# EUROPEAN PATENT SPECIFICATION

(11) **EP 2 921 903 B1**
(45) Date of publication and mention of the grant of the patent: **20.11.2019**
(21) Application number: 15158987.6
(22) Date of filing: 13.03.2015
(51) Int. Cl.: G02F 1/1337, G02F 1/1343

(54) **LIQUID CRYSTAL DISPLAY APPARATUS**
FLÜSSIGKRISTALLANZEIGEVORRICHTUNG
APPAREIL D'AFFICHAGE À CRISTAUX LIQUIDES

(30) Priority: 17.03.2014 JP 2014053037
(43) Date of publication of application: 23.09.2015
(73) Proprietor: STANLEY ELECTRIC CO., LTD., Tokyo 153-8636 (JP)
(72) Inventor: Iwamoto, Yoshihisa, Tokyo, 153-8636 (JP)
(74) Representative: Carstens, Dirk Wilhelm

(56) References cited:
- US-A1- 2012 075 561

## Description

### BACKGROUND OF THE INVENTION

### Field of the Invention

The present invention relates to a liquid crystal display apparatus comprising an electrode with a plurality of openings.

### Description of the Background Art

As an example of a VA (Vertical Alignment) mode liquid crystal display element, JP 2012-63711 A discloses a liquid crystal display element comprising a first electrode disposed to display a predetermined display pattern in a display region, a second electrode that faces the first electrode, and a liquid crystal layer that is provided between the first electrode and the second electrode and in which the alignment of the liquid crystals when no voltage is applied is vertical, wherein a plurality of regularly disposed L-shaped slits is formed on either the first electrode or the second electrode. In this liquid crystal display element, each of the L-shaped slits is formed so that, within a region where at least the first electrode and the second electrode overlap, the electrode provided with the slits is a plurality of rectangular sub-pixel electrodes, and is divided into a plurality of rectangular sub-pixel electrodes comprising connecting parts on three corners for connecting adjacent sub-pixel electrodes. According to this prior art, the alignment disorder that occurs when voltage is applied in a VA mode liquid crystal display element is decreased, making it possible to make the alignment of the liquid crystals more uniform.

Further, similar prior art is also disclosed in CN 101477280 A .

US 2012/075561 A1 was used as a basis for the preamble of claim 1 and discloses a liquid crystal display which includes a first substrate having a first electrode on one surface side, a second substrate having second electrode on one surface side and placed opposite to the first substrate. A liquid crystal layer having a pretilt angle of 89.7° or more and less than 90° is disposed between the first and second electrodes. The first and second electrodes respectively form a pixel in opposing areas. The first electrode includes rectangularly shaped openings disposed with regularity in the pixel in a planar view. The openings include first and second openings with longitudinal directions respectively facing first and second directions, the second direction different from the first direction.; The angle formed by the longitudinal directions of the first and second openings, and an alignment direction of liquid crystal molecules at the substantial center of the liquid crystal layer is 0° or more and less than 90°.

However, if each slit is arranged along the vertical direction and horizontal direction of the display screen in a liquid crystal display apparatus that realizes a multi-domain alignment using a plurality of slits such as the prior art described above, vertical or horizontal stripe-shaped display irregularities are sometimes observed during appearance observation.

It is therefore an object of the specific aspects according to the present invention to provide a technique capable of preventing vertical or horizontal stripe-shaped display irregularities in appearance observation in a liquid crystal display apparatus that realizes a multi-domain alignment by a plurality of slits.

### SUMMARY OF THE INVENTION

The liquid crystal display apparatus according to the present invention is a liquid crystal display apparatus as set forth in claim 1 or claim 3. Preferred embodiments of the present invention may be gathered from the dependent claims. Specifically, according to a preferred embodiment, each of the plurality of regions corresponds to one alignment domain unit. As used herein throughout the description and the claims, the term "trapezoid" means "quadrilateral with one pair of opposite sides parallel".

### BRIEF DESCRIPTION OF THE DRAWINGS

Fig. 1 is a cross-sectional view showing the basic structure of the liquid crystal display apparatus of an embodiment.
Fig. 2 is a plan view showing a structure example of the electrodes of the liquid crystal display apparatus.
Fig. 3A is a plan view showing a structure example of the respective openings. Fig. 3B is a plan view showing a comparison example of the respective openings.
Fig. 4A and Fig. 4B are plan views showing structure examples of the respective openings. Fig. 4C is a plan view showing a comparison example of the respective openings.
Fig. 5A and Fig. 5B are plan views showing structure examples of the respective openings. Fig. 5C is a plan view showing a comparison example of the respective openings.
Figs. 6A-6D are plan views showing structure examples of the respective openings.
Fig. 7A shows an alignment texture of an execution example during a light display of a liquid crystal display apparatus comprising the respective substantially L-shaped openings shown in the structure example of Fig. 3A described above.
Fig. 7B shows an alignment texture of a comparison example during a light display of a liquid crystal display apparatus comprising the respective openings shown in the comparison example of Fig. 3B described above.
Fig. 8A shows an alignment texture of an execution example during a light display of a liquid crystal display apparatus comprising the respective substantially T-shaped openings shown in the structure example of in Fig. 4A described above.
Fig. 8B shows an alignment texture of an execution example during a light display of a liquid crystal display apparatus comprising the respective substantially T-shaped openings shown in the structure example of Fig. 4B described above.
Fig. 8C shows an alignment texture of a comparison example during a light display of a liquid crystal display apparatus comprising the respective openings shown in the comparison example of Fig. 4C described above.
Fig. 9A shows an alignment texture of an execution example during a light display of a liquid crystal display apparatus comprising the respective substantially T-shaped openings shown in the structure example of Fig. 5A described above.
Fig. 9B shows an alignment texture of an execution example during a light display of a liquid crystal display apparatus comprising the respective substantially T-shaped openings shown in in the structure example of Fig. 5B described above.
Fig. 9C shows an alignment texture of a comparison example during a light display of a liquid crystal display apparatus comprising the respective openings shown in the comparison example of Fig. 5C described above.
Fig. 10A shows an alignment texture of an execution example during a light display of a liquid crystal display apparatus comprising the respective substantially T-shaped openings shown in the structure example of Fig. 6A described above.
Fig. 10B shows an alignment texture of an execution example during a light display of a liquid crystal display apparatus comprising the respective substantially T-shaped openings shown in the structure example of Fig. 6B described above.
Fig. 10C shows an alignment texture of an execution example during a light display of a liquid crystal display apparatus comprising the respective substantially T-shaped openings shown in the structure example of Fig. 6C described above.
Fig. 10D shows an alignment texture of an execution example during a light display of a liquid crystal display apparatus comprising the respective substantially T-shaped openings shown in the structure example of Fig. 6D described above.

### DESCRIPTION OF THE PREFERRED EMBODIMENTS

The following describes embodiments of the present invention with reference to drawings.

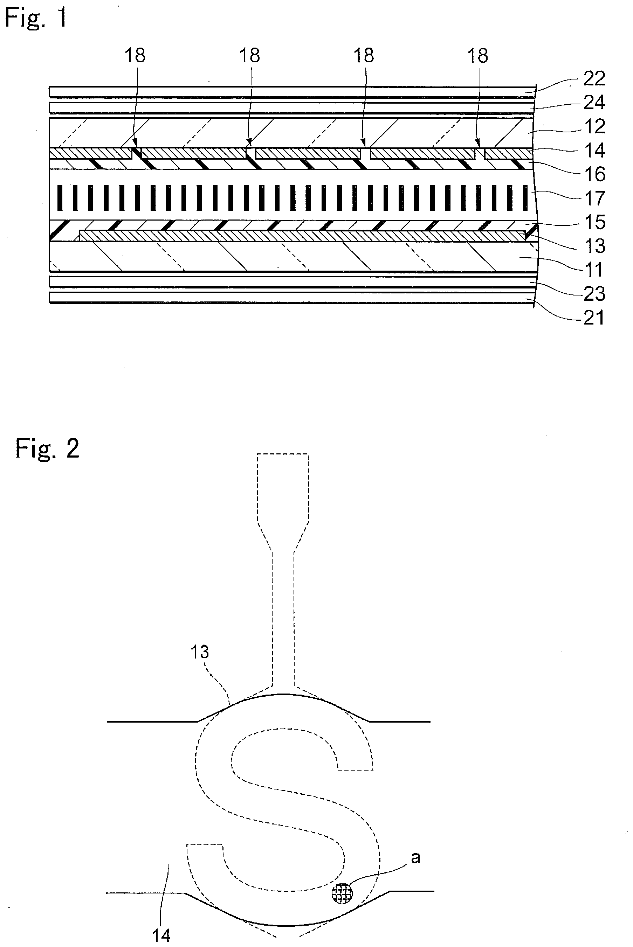

Fig. 1 is a cross-sectional view showing the basic structure of the liquid crystal display apparatus of an embodiment. This liquid crystal display apparatus comprises a first substrate 11 and a second substrate 12 disposed facing each other, a first electrode 13 provided to the first substrate 11, a second electrode 14 provided to the second substrate 12, and a liquid crystal layer 17 disposed between the first substrate 11 and the second substrate 12, as a basic configuration. Fig. 2 is a plan view showing an example of the structure of the electrodes of the liquid crystal display apparatus. As shown in Fig. 2, the liquid crystal display apparatus of this embodiment is configured so that the region where the first electrode 13 and the second electrode 14 overlap each other forms the characters and designs that the user wants to display. The apparatus is basically capable of displaying only predetermined characters and the like, and is a segment display-type liquid crystal display apparatus wherein generally a region of about 50% or less in terms of the area ratio inside the effective display region contributes to the display of characters and the like. Note that the liquid crystal display apparatus may be a dot matrix display type wherein a plurality of pixels is arranged in a matrix pattern, or may include both a segment display type and a dot matrix display type.

The first substrate 11 and the second substrate 12 are each a transparent substrate, such as a glass substrate, plastic substrate, or the like, for example. As shown, the first substrate 11 and the second substrate 12 are bonded together with a predetermined gap (approximately 4 µm, for example) therebetween.

The first electrode 13 is provided to one surface side of the first substrate 11. Similarly, the second electrode 14 is provided to one surface side of the second substrate 12. The first electrode 13 and the second electrode 14 are each configured by suitably patterning a transparent conductive film, such as indium-tin oxide (ITO), for example. A plurality of openings 18 is provided to the first electrode 13.

A first alignment film 15 is provided to one surface side of the first substrate 11 so as to cover the first electrode 13. A second alignment film 16 is provided to one surface side of the second substrate 12 so as to cover the second electrode 14. A vertical alignment film that restricts the alignment of the liquid crystal layer 17 to a vertical alignment is used as the first alignment film 15 and the second alignment film 16. A uniaxial alignment process such as a rubbing process is not performed on either of the alignment films 15 or 16.

The liquid crystal layer 17 is provided between the first substrate 11 and the second substrate 12. In this embodiment, the liquid crystal layer 17 is configured using a liquid crystal material with a negative dielectric anisotropy Δ*ε*. The bold lines shown in the liquid crystal layer 17 schematically indicate the direction of alignment of the liquid crystal molecules in the liquid crystal layer 17. The liquid crystal layer 17 of this embodiment is set in a vertical alignment in which the direction of alignment of the liquid crystal molecules when a voltage is not applied is vertical with respect to each substrate surface of the first substrate 11 and the second substrate 12.

A first polarizer 21 is disposed on the outside of the first substrate 11. Similarly, a second polarizer 22 is disposed on the outside of the second substrate 12. The first polarizer 21 and the second polarizer 22 are disposed so that the respective absorption axes are substantially perpendicular to each other. Further, an optical compensator, such as a C plate, may be suitably disposed between each polarizer and each substrate. For example, according to this embodiment, optical compensators 23 and 24 are disposed between the first substrate 11 and the first polarizer 21, and between the second substrate 12 and the second polarizer 22, respectively.

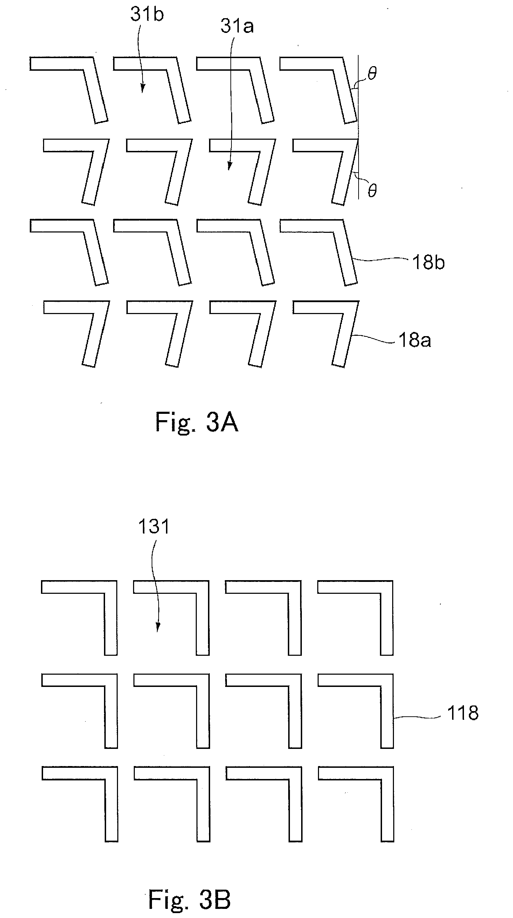

Fig. 3A, Figs. 4A-4B, Figs. 5A-5B, and Figs. 6A-6D are plan views showing structure examples of the respective openings. And Fig. 3B, Fig. 4C, and Fig. 5C are plan views showing comparison examples of the respective openings. Each figure is an enlarged view of the circled area *a* in Fig. 2. The following describes in detail, the structure of respective openings 18 in a planer view, with reference to each of the drawings.

Each of the openings 18 in the structure example shown in Fig. 3A comprises a substantially L-shape wherein an area long in the horizontal direction and an area long in a direction inclined with respect to the vertical direction are joined together, in the planar view. Specifically, there are two areas long in a direction inclined with respect to the vertical direction: an area long in a direction inclined clockwise using the vertical direction as reference, and an area long in a direction inclined counterclockwise using the vertical direction as reference. The inclination angle θ of each area, using the vertical direction as reference, is about 10° to 30°, for example. Here, the opening 18 comprising an area long in the direction inclined clockwise is expressed as "opening 18a," and the opening 18 comprising an area long in the direction inclined counterclockwise is expressed as "opening 18b." In each of the openings 18a, the area long in the horizontal direction and the area inclined clockwise with respect to the vertical direction are joined together at respective one end sides, forming an acute angle. In each of the openings 18b, the area long in the horizontal direction and the area inclined counterclockwise with respect to the vertical direction are joined together at respective one end sides, forming an obtuse angle. Each of the openings 18a and 18b are regularly disposed in the vertical direction and horizontal direction, and both are intricately arranged in the form of a matrix as a whole. In the horizontal direction, the respective openings 18a are linearly disposed in series, and the respective openings 18b are linearly disposed in series. In the vertical direction, the opening 18a and the opening 18b are alternately disposed one by one, and linearly disposed in series as a whole.

A region 31a surrounded by two of the openings 18a adjacent in the horizontal direction and one of the openings 18b on the lower side thereof is substantially parallelogram shaped, and disposed forming rows in the horizontal direction. Similarly, a region 31b surrounded by two of the openings 18b adjacent in the horizontal direction and one of the openings 18a on the lower side thereof is substantially parallelogram shaped, and disposed forming rows in the horizontal direction. The region 31a and the region 31b are linearly symmetric in the vertical direction. When viewed as a whole, the respective regions 31a and 31b are disposed in the form of a regular matrix in the vertical direction and horizontal direction. In each of the regions 31a and 31b, one parallelogram-shaped alignment domain is formed and, inside this alignment domain, an alignment texture in which the liquid crystal molecules are oriented in the direction of 360° is achieved. Note that the area long in a direction inclined with respect to the vertical direction and the area long in the horizontal direction of the respective openings 18a and 18b may be divided and not joined together. In this case as well, the same advantages are achieved. In either case, the areas inclined with respect to the vertical direction of the respective openings 18a and 18b are not disposed linearly but rather so that they are cyclically bent as a whole, thereby suppressing the vertical stripe-shaped display irregularities along the vertical direction in appearance observation.

Each opening 118 in a comparison example shown in Fig. 3B is L-shaped in the planar view, and each rectangular region 131 is demarcated by these openings 118. The respective rectangular regions 131 are regularly disposed so as to form a plurality of columns along the vertical direction and a plurality of rows in the horizontal direction, and are disposed in the form of a matrix as a whole. If the respective rectangular regions 131 are disposed in this manner, vertical stripe-shaped or horizontal stripe-shaped display irregularities may occur when observed, in particular, from an inclined direction using the normal line of the display surface of the liquid crystal display apparatus as reference, during appearance observation of 0. This is conceivably caused by the fact that the areas long in the vertical direction and the areas long in the horizontal direction of the respective openings 118 are linearly disposed, forming columns in the vertical direction and rows in the horizontal direction, respectively.

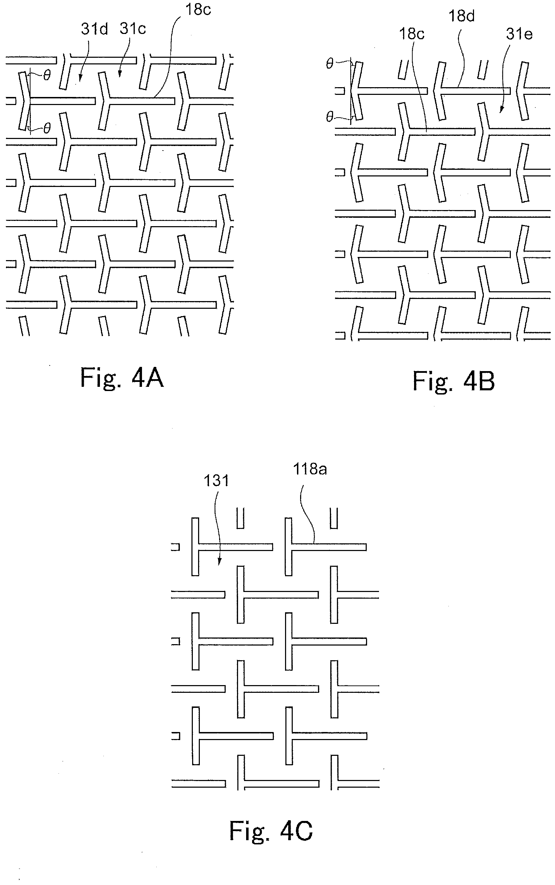

Each of the openings 18 in the structure example shown in Fig. 4A comprises a substantially T-shape wherein an area long in the horizontal direction and a bent area that extends in the vertical direction are joined together, in the planar view. These substantially T-shaped openings 18 are expressed herein as "openings 18c." Specifically, the area bent in the vertical direction is one wherein an area long in a direction inclined clockwise using the vertical direction as reference, and an area long in a direction inclined counterclockwise using the vertical direction as reference are joined together. The inclination angle θ of each area, using the vertical direction as reference, is about 10° to 30°, for example. The respective openings 18c are configured so that one end side of the area long in the horizontal direction joins the convex side of the middle bending point of the area bent in the vertical direction. The respective openings 18c are regularly disposed in the vertical direction and horizontal direction, and arranged in the form of the matrix as a whole. In the horizontal direction, the areas long in the horizontal direction of the respective openings 18c are linearly disposed in series. In the vertical direction, the respective openings 18c of a certain row and the respective openings 18c of a row adjacent thereto are shifted by a half pitch.

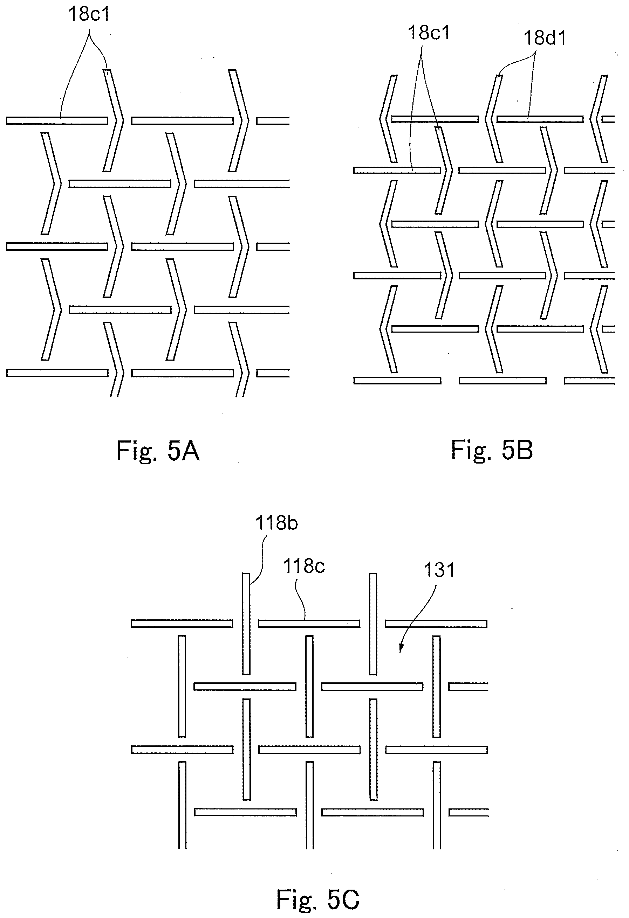

A region 31c surrounded by two of the openings 18c adjacent in the horizontal direction and one of the openings 18c on the lower side thereof is substantially trapezoid shaped, with the lower side shorter than the upper side. Similarly, a region 31d surrounded by two of the openings 18c adjacent in the horizontal direction and one of the openings 18c on the upper side thereof is substantially trapezoid shaped, with the lower side longer than the upper side. The respective regions 31c and the respective regions 31d are alternately disposed one by one, and are disposed forming rows in the horizontal direction. The region 31c and the region 31d are linearly symmetric in the vertical direction. When viewed as a whole, the respective regions 31c and 31d are disposed in the form of a regular matrix in the vertical direction and horizontal direction. In each of the regions 31c and 31d, one trapezoid-shaped alignment domain is formed and, inside this alignment domain, an alignment texture in which the liquid crystal molecules are oriented in the direction of 360° is achieved. Note that the area bent in the vertical direction and the area long in the horizontal direction of the respective openings 18c may be divided and not joined together. (Refer to Fig. 5A as described later.) In this case as well, the same advantages are achieved. In either case, the areas bent in the vertical direction of the respective openings 18c are not disposed linearly but rather so that they are cyclically bent as a whole, thereby suppressing the vertical stripe-shaped display irregularities in appearance observation.

Each of the openings 18 in the structure example shown in Fig. 4B comprises two types of substantially T-shape wherein an area long in the horizontal direction and a bent area that extends in the vertical direction are joined together, in the planar view. One of these types is the "opening 18c," similar to that described above. The other type is an "opening 18d," which is configured so that one end side of an area long in the horizontal direction joins the concave side of the middle bending point of the bent area that extends in the vertical direction. Each inclination angle θ of the bent area that extends in the vertical direction of the respective openings 18d, using the vertical direction as reference, is about 10° to 30°, for example. Similar to the respective openings 18c, the respective openings 18d are regularly disposed in the vertical direction and horizontal direction, and both are intricately arranged in the form of a matrix as a whole. In the horizontal direction, the areas long in the horizontal direction of the respective openings 18d are linearly disposed in series. In the vertical direction, rows made of the respective openings 18c and rows made of the respective openings 18d are alternately disposed and shifted from each other by a half pitch.

A region 31e surrounded by two of the openings 18c adjacent in the horizontal direction and one of the openings 18d on the lower side thereof is substantially parallelogram shaped. Similarly, a region 31e surrounded by two of the openings 18d adjacent in the horizontal direction and one of the openings 18c on the lower side thereof is substantially parallelogram shaped. The respective regions 31e are disposed forming rows in the horizontal direction. When viewed as a whole, the respective regions 31e are disposed in the form of a regular matrix in the vertical direction and horizontal direction. In each of the regions 31e, one parallelogram-shaped alignment domain is formed and, inside this alignment domain, an alignment texture in which the liquid crystal molecules are oriented in the direction of 360° is achieved. Note that the area bent in the vertical direction and the area long in the horizontal direction of the respective openings 18c and 18d may be divided and not joined together. (Refer to Fig. 5B as described later.) In this case as well, the same advantages are achieved. In either case, the areas bent in the vertical direction of the respective openings 18c and 18d are not disposed linearly but rather so that they are cyclically bent as a whole, thereby suppressing the vertical stripe-shaped display irregularities in appearance observation.

Each opening 118a in a comparison example shown in Fig. 4C is T-shaped in the planar view, and each of the rectangular regions 131 is demarcated by these openings 118a. The respective rectangular regions 131 are disposed so as to form a plurality of columns along the vertical direction and a plurality of rows in the horizontal direction, and are disposed in the form of a matrix as a whole. If the respective rectangular regions 131 are disposed in this manner, vertical stripe-shaped or horizontal stripe-shaped display irregularities may occur when observed, in particular, from an inclined direction using the normal line of the display surface of the liquid crystal display apparatus as reference, during an appearance observation of the light display state. This is conceivably caused by the fact that the areas long in the vertical direction and the areas long in the horizontal direction of the respective openings 118a are linearly disposed, forming columns in the vertical direction and rows in the horizontal direction, respectively.

Each of the openings 18 in the structure example shown in Fig. 5A is a modification of the substantially T-shaped opening shown in Fig. 4A described above. The difference from the structure example in Fig. 4A is that the bent areas that extend in the vertical direction and the areas long in the horizontal direction of the respective openings 18c are divided and not joined together. Each opening 18c1 shown refers to a combination of the bent area that extends in the vertical direction and the area long in the horizontal direction. In this case as well, the areas bent in the vertical direction of the respective openings 18c1 are not disposed linearly but rather so that they are cyclically bent as a whole, thereby suppressing the vertical stripe-shaped display irregularities in appearance observation.

Each of the openings 18 in the structure example shown in Fig. 5B is a modification of the substantially T-shaped opening shown in Fig. 4B described above. The difference from the structure example in Fig. 4B is that the bent areas that extend in the vertical direction and the areas long in the horizontal direction of the respective openings 18c and 18d are divided and not joined together. Each of the openings 18c1 and 18d1 shown refers to a combination of the bent area that extends in the vertical direction and the area long in the horizontal direction. In this case as well, the areas bent in the vertical direction of the respective openings 18c1 and 18d1 are not disposed linearly but rather so that they are cyclically bent as a whole, thereby suppressing the vertical stripe-shaped display irregularities in appearance observation.

Respective openings 118b and 118c in the comparison example shown in Fig. 5C are arranged in the vertical direction and in the horizontal direction, respectively, both are intricate, and each of the rectangular regions 131 is demarcated by two of the openings 118b adjacent in the horizontal direction and two of the openings 118c adjacent in the vertical direction. The respective rectangular regions 131 are disposed so as to form a plurality of columns along the vertical direction and a plurality of rows in the horizontal direction, and are disposed in the form of a matrix as a whole. If the respective rectangular regions 131 are disposed in this manner, vertical stripe-shaped or horizontal stripe-shaped display irregularities may occur when observed, in particular, from an inclined direction using the normal line of the display surface of the liquid crystal display apparatus as reference, during an appearance observation of the light display state. This is conceivably caused by the fact that the respective openings 118b and 118c are linearly disposed, forming columns in the vertical direction and rows in the horizontal direction, respectively.

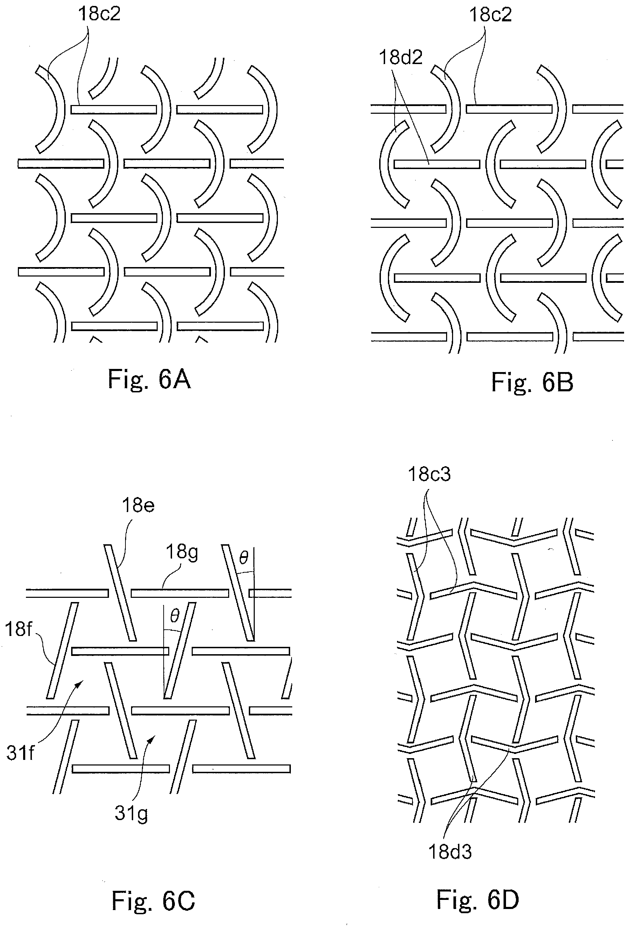

Each of the openings 18 in the structure example shown in Fig. 6A is a modification of the substantially T-shaped opening shown in Fig. 5A described above. The difference from the structure example in Fig. 5A is that each bent area that extends in the vertical direction of the respective openings 18c1 is replaced with an area that is curved in the form of a curve extending in the vertical direction. Each opening 18c2 shown refers to a combination of the curved area that extends in the vertical direction and the area long in the horizontal direction. In this case as well, the areas curved in the vertical direction of the respective openings 18c2 are not disposed linearly but rather so that they are cyclically curved as a whole, thereby suppressing the vertical stripe-shaped display irregularities in appearance observation.

Each of the openings 18 in the structure example shown in Fig. 6B is a modification of the substantially T-shaped opening shown in Fig. 5B described above. The difference from the structure example in Fig. 5B is that each bent area that extends in the vertical direction of the respective openings 18c1 and 18d1 is replaced with an area that is curved in the form of a curve extending in the vertical direction. Each of the openings 18c2 and 18d2 shown refers to a combination of the curved area that extends in the vertical direction and the area long in the horizontal direction. In this case as well, the areas curved in the vertical direction of the respective openings 18c2 and 18d2 are not disposed linearly but rather so that they are cyclically curved as a whole, thereby suppressing the vertical stripe-shaped display irregularities in appearance observation.

The respective openings 18 in the structure example shown in Fig. 6C include respective openings 18e that extend in a direction rotated by a predetermined angle θ (10° to 30°, for example) counterclockwise using the vertical direction as reference, respective openings 18f that extend in a direction rotated by a predetermined angle θ (10° to 30°, for example) clockwise using the vertical direction as reference, and respective openings 18g that extend in the horizontal direction. The respective openings 18e and 18f are each disposed so as to form columns in the vertical direction, and both columns are alternately disposed column by column in the horizontal direction. Further, the center of gravity positions of the respective openings 18e and the respective openings 18f are disposed in a checkered pattern. The respective openings 18g are disposed forming rows in the horizontal direction, and are disposed forming columns in the vertical direction. The horizontal-direction positions of the respective openings 18g of a row adjacent in the vertical direction are shifted from each other by a half pitch. Further, the respective openings 18g are disposed between two of the openings 18e adjacent in the horizontal direction, or between two of the openings 18f adjacent in the horizontal direction.

A region 31f surrounded by the openings 18e and 18f, one each, adjacent in the horizontal direction, and two of the openings 18g above and below these openings 18e and 18f, is substantially trapezoid shaped, with the lower side longer than the upper side. Similarly, a region 31g surrounded by the openings 18e and 18f, one each, adjacent in the horizontal direction, and two of the openings 18g above and below these openings 18e and 18f, is substantially trapezoid shaped with the lower side shorter than the upper side. The respective regions 31f and the respective regions 31g are alternately disposed one by one, and are disposed forming rows in the horizontal direction. When viewed as a whole, the respective regions 31f and 31g are disposed in the form of a regular matrix in the vertical direction and horizontal direction. In each of the regions 31f and 31g, one trapezoid-shaped alignment domain is formed and, inside this alignment domain, an alignment texture in which the liquid crystal molecules are oriented in the direction of 360° is achieved. Note that, although not shown, the respective openings 18g may be combined with either type of the respective openings 18e and 18f. In this case, while the region surrounded by the respective openings becomes substantially parallelogram shaped, advantages similar to those described above are achieved. In both cases, the respective openings 18e and 18f are not disposed linearly but rather so that they cyclically fold back as a whole, thereby suppressing vertical stripe-shaped display irregularities in appearance observation.

Each of the openings 18 in the structure example shown in Fig. 6D is a modification of the substantially T-shaped opening shown in Fig. 5B described above. The difference from the structure example in Fig. 5B is that the areas long in the horizontal direction of the respective openings 18c1 and 18d1 are replaced with bent areas that extend in the horizontal direction. Each of the openings 18c3 and 18d3 shown refers to a combination of the bent area that extends in the vertical direction and the bent area that extend in the horizontal direction. In this case as well, the areas bent in the vertical direction and the horizontal direction of the respective openings 18c3 and 18d3 are not disposed linearly but rather so that they are cyclically bent as a whole, thereby suppressing the vertical stripe-shaped display irregularities in appearance observation.

### (Execution examples)

Next, execution examples related to several of the structure examples described above as well as comparison examples will be described.

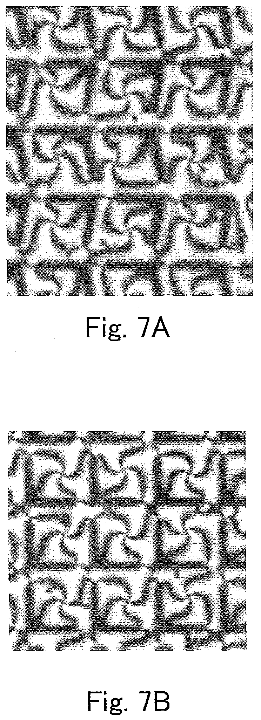

Fig. 7A shows an alignment texture of an execution example during a light display of a liquid crystal display apparatus comprising the respective substantially L-shaped openings shown in the structure example of Fig. 3A described above. Here, the length (slit length) of the areas long in the vertical direction and the areas long in the horizontal direction of the respective openings was set to 50 µm, the widths (slit widths) of the respective areas was set to 10 µm, the disposed pitch in the vertical direction and horizontal direction of the respective openings 18 was set to 60 µm, and the angle θ was set to 10°. Inside the alignment domain of each region, an alignment texture oriented in the direction of 360° was observed as shown. An appearance observation was performed on the light display state of the liquid crystal display apparatus in this execution example, confirming that vertical stripe-shaped display irregularities were not sighted when observed from an inclined direction using the normal line of the display surface as reference.

Fig. 7B shows an alignment texture of a comparison example during a light display of a liquid crystal display apparatus comprising the respective openings shown in the comparison example of Fig. 3B described above. Here, the length (slit length) of the areas long in the vertical direction and the areas long in the horizontal direction of the respective openings was set to 50 µm, the widths (slit widths) of the respective areas was set to 10 µm, the disposed pitch in the vertical direction and horizontal direction of the respective openings 18 was set to 60 µm. Inside the alignment domain of each region, an alignment texture where the liquid crystal molecules were oriented in the direction of 360° was observed as shown. An appearance observation was performed on the light display state of the liquid crystal display apparatus in this comparison example, and there were occasions where vertical or horizontal stripe-shaped display irregularities were sighted when observed from an inclined direction using the normal line of the display surface as reference.

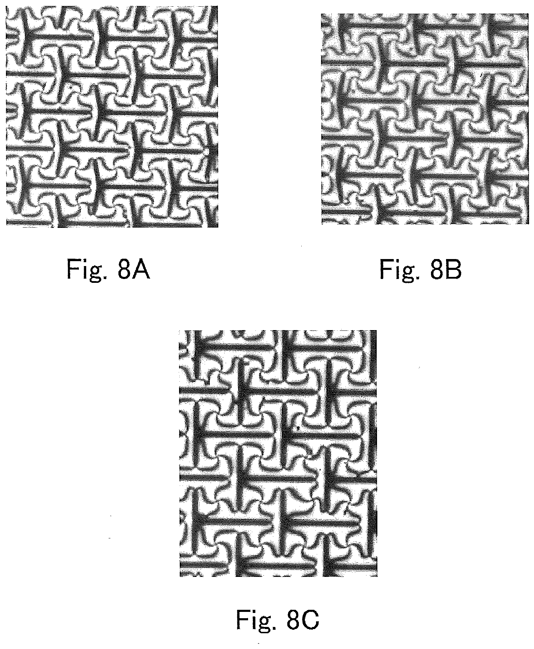

Fig. 8A shows an alignment texture of an execution example during a light display of a liquid crystal display apparatus comprising the respective substantially T-shaped openings shown in the structure example of in Fig. 4A described above. And Fig. 8B shows an alignment texture of an execution example during a light display of a liquid crystal display apparatus comprising the respective substantially T-shaped openings shown in the structure example of Fig. 4B described above. Here, the length (slit length) of the areas long in the vertical direction was set to 90 µm, and the length (slit length) of the areas long in the horizontal direction of the respective openings was set to 100 µm, the widths (slit widths) of the respective areas was set to 10 µm, the disposed pitch in the vertical direction and horizontal direction of the respective openings was set to 120 µm, and the angle θ was set to 10°. Inside the alignment domain of each region, an alignment texture where the liquid crystal molecules were oriented in the direction of 360° was observed as shown. An appearance observation was performed on the light display state of the liquid crystal display apparatus these execution examples, confirming that vertical stripe-shaped display irregularities were not sighted when observed from an inclined direction using the normal line of the display surface as reference.

Fig. 8C shows an alignment texture of a comparison example during a light display of a liquid crystal display apparatus comprising the respective openings shown in the comparison example of Fig. 4C described above. Here, the length (slit length) of the areas long in the vertical direction was set to 90 µm, and the length (slit length) of the areas long in the horizontal direction of the respective openings was set to 100 µm, the widths (slit widths) of the respective areas was set to 10 µm, the disposed pitch in the vertical direction and horizontal direction of the respective openings 18 was set to 120 µm. Inside the alignment domain of each region, an alignment texture where the liquid crystal molecules were oriented in the direction of 360° was observed as shown. An appearance observation was performed on the light display state of the liquid crystal display apparatus in this comparison example, and there were occasions where vertical stripe-shaped or horizontal stripe-shaped display irregularities were sighted when observed from an inclined direction using the normal line of the display surface as reference.

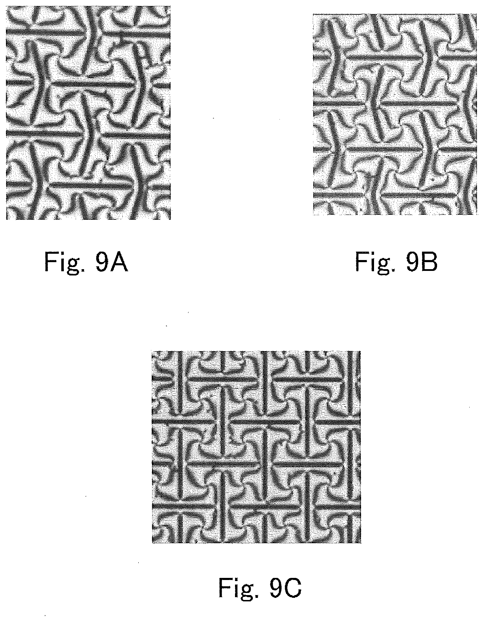

Fig. 9A shows an alignment texture of an execution example during a light display of a liquid crystal display apparatus comprising the respective substantially T-shaped openings shown in the structure example of Fig. 5A described above. And Fig. 9B shows an alignment texture of an execution example during a light display of a liquid crystal display apparatus comprising the respective substantially T-shaped openings shown in in the structure example of Fig. 5B described above. Here, the length (slit length) of the areas long in the vertical direction was set to 130 µm, and the length (slit length) of the areas long in the horizontal direction of the respective openings was set to 130 µm, the widths (slit widths) of the respective areas was set to 10 µm, the disposed pitch in the vertical direction and horizontal direction of the respective openings was set to 160 µm, and the angle θ was set to 15°. Inside the alignment domain of each region, an alignment texture where the liquid crystal molecules were oriented in the direction of 360° was observed as shown. An appearance observation was performed on the light display state of the liquid crystal display apparatus in these execution examples, confirming that vertical stripe-shaped display irregularities were not sighted when observed from an inclined direction using the normal line of the display surface as reference.

Fig. 9C shows an alignment texture of an comparison example during a light display of a liquid crystal display apparatus comprising the respective openings shown in the comparison example of Fig. 5C described above. Here, the length (slit length) of the areas long in the vertical direction was set to 130 µm, and the length (slit length) of the areas long in the horizontal direction of the respective openings was set to 130 µm, the widths (slit widths) of the respective areas was set to 10 µm, the disposed pitch in the vertical direction and horizontal direction of the respective openings 18 was set to 160 µm. Inside the alignment domain of each region, an alignment texture where the liquid crystal molecules were oriented in the direction of 360° was observed as shown. An appearance observation was performed on the light display state of the liquid crystal display apparatus in this comparison example, and there were occasions where vertical stripe-shaped or horizontal stripe-shaped display irregularities were sighted when observed from an inclined direction using the normal line of the display surface as reference.

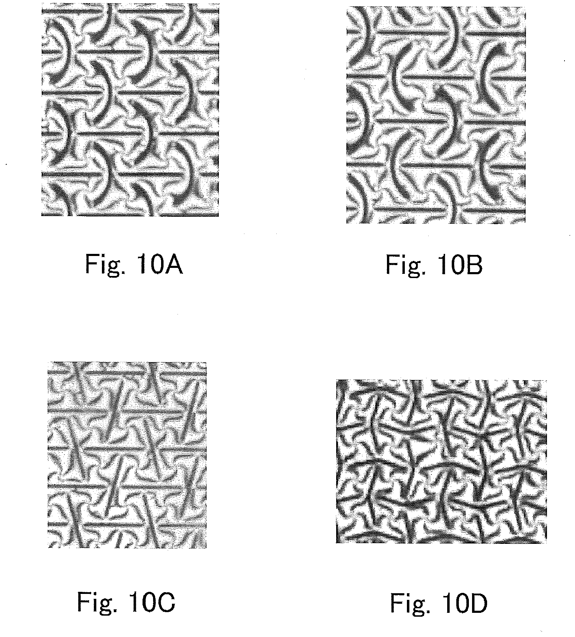

Fig. 10A shows an alignment texture of an execution example during a light display of a liquid crystal display apparatus comprising the respective substantially T-shaped openings shown in the structure example of Fig. 6A described above. Fig. 10B shows an alignment texture of an execution example during a light display of a liquid crystal display apparatus comprising the respective substantially T-shaped openings shown in the structure example of Fig. 6B described above. Fig. 10C shows an alignment texture of an execution example during a light display of a liquid crystal display apparatus comprising the respective substantially T-shaped openings shown in the structure example of Fig. 6C described above. Fig. 10D shows an alignment texture of an execution example during a light display of a liquid crystal display apparatus comprising the respective substantially T-shaped openings shown in the structure example of Fig. 6D described above. The numerical values of the size parameters of the respective openings as well as the disposed pitch values are similar to those described above. Inside the alignment domain of each region, an alignment texture where the liquid crystal molecules were oriented in the direction of 360° was observed as shown in each figure. An appearance observation was performed on the light display y state of the liquid crystal display apparatus in this embodiment, confirming that vertical stripe-shaped display irregularities were not sighted when observed from an inclined direction using the normal line of the display surface as reference. Further, in Fig. 10D, when appearance observation was performed on the light display state of the liquid crystal display apparatus in this execution example, it was confirmed that horizontal stripe-shaped display irregularities were not sighted when observed from an inclined direction using the normal line of the display surface as reference.

According to the embodiments and execution examples described above, in a liquid crystal display apparatus that realizes a multi-domain alignment by a plurality of slits, it is possible to prevent vertical or horizontal stripe-shaped display irregularities in appearance observation.

Note that this invention is not limited to the subject matter of the foregoing embodiments, and can be implemented by being variously modified within the scope of the present invention as defined by the appended claims. For example, while the respective openings are provided only to one electrode in the embodiments described above, the openings may be provided to both electrodes. Further, while the respective openings are provided only to the second electrode in the embodiments described above, the openings may be provided to the first electrode as well. Further, the respective openings that curve in the form of a curve in the embodiment described above may be configured by a plurality of line segments, such as polygon lines, or a combination of line segments and curves.

## Claims

1. A liquid crystal display apparatus comprising:
a first substrate (11) and a second substrate (12) disposed facing each other;
a first electrode (13) provided to the first substrate (11);
a second electrode (14) provided to the second substrate (12); and
a liquid crystal layer (17) disposed between the first substrate (11) and the second substrate (12) wherein the direction of alignment of the liquid crystal molecules when a voltage is not applied is vertical with respect to each substrate surface of the first substrate (11) and the second substrate (12);
wherein:
at least one of the first electrode (14) and the second electrode (15) comprises a plurality of openings (18, 18a, 18b, 18e, 18f, 18g) in at least an area where the first electrode (13) and the second electrode (14) overlap;
the plurality of openings (18, 18a, 18b, 18e, 18f, 18g) comprises a first area that extends in a direction that obliquely crosses a first direction, and a second area that extends in a second direction that crosses the first direction, in the planar view, respectively; and
each of a plurality of regions (31a, 31b, 31f, 31g) surrounded and demarcated by three or more of any of the plurality of openings (18, 18a, 18b, 18e, 18f, 18g) is substantially parallelogram shaped or substantially trapezoid shaped, wherein a trapezoid is a quadrilateral with one pair of parallel opposite sides;
**characterized in that**
in each of the plurality of regions (31a, 31b, 31f, 31g) surrounded and demarcated by three or more of any of the plurality of openings (18, 18a, 18b, 18e, 18f, 18g), an alignment texture is formed in which the liquid crystal molecules are oriented in a 360° azimuthal range.

2. The liquid crystal display apparatus according to claim 1, wherein:
each of the plurality of openings (18a, 18b) comprises a substantially L-shape wherein the respective one end sides of the first area and the second area join together, in the planar view.

3. A liquid crystal display apparatus comprising:
a first substrate (11) and a second substrate (12) disposed facing each other;
a first electrode (13) provided to the first substrate (11);
a second electrode (14) provided to the second substrate (12); and
a liquid crystal layer (17) disposed between the first substrate (11) and the second substrate (12), the direction of alignment of the liquid crystal molecules when a voltage is not applied is vertical with respect to each substrate surface of the first substrate 11 and the second substrate 12;
wherein:
at least one of the first electrode (14) and the second electrode (15) comprises a plurality of openings (18, 18c, 18d) in at least an area where the first electrode (13) and the second electrode (14) overlap;
the plurality of openings (18c, 18d) comprises a bent or curved first area that extends along a first direction, and a second area that extends in a second direction that crosses the first direction, in the planar view, respectively; and
each of a plurality of regions (31c, 31d, 31e) surrounded and demarcated by three or more of any of the plurality of openings (18c, 18d) is substantially parallelogram shaped or substantially trapezoid shaped, wherein a trapezoid is a quadrilateral with one pair of parallel opposite sides;
**characterized in that**
in each of the plurality of regions (31c, 31d, 31e) surrounded and demarcated by three or more of any of the plurality of openings (18c, 18d), an alignment texture is formed in which the liquid crystal molecules are oriented in a 360° azimuthal range.

4. The liquid crystal display apparatus according to claim 3, wherein:
each of the plurality of openings (18c, 18d) comprises a substantially T-shape wherein a middle area of the first area in the first direction and one end side of the second area join together, in the planar view.

5. The liquid crystal display apparatus according to claim 1 or 3, wherein:
each of the plurality of regions (31a-g) corresponds to one alignment domain unit.

6. The liquid crystal display apparatus according to any of the preceding claims, wherein:
a first alignment film (15) without alignment treatment is provided to one surface side of said first substrate (11) and a second alignment film (16) without alignment treatment is provided to one surface side of said second substrate (12).

## Patentansprüche

1. Flüssigkristallanzeigevorrichtung, die Folgendes aufweist:
ein erstes Substrat (11) und ein zweites Substrat (12), die zueinander weisend angeordnet sind;
eine erste Elektrode (13), die auf dem ersten Substrat (11) vorgesehen ist;
eine zweite Elektrode (14), die auf dem zweiten Substrat (12) vorgesehen ist; und
eine Flüssigkristallschicht (17), die zwischen dem ersten Substrat (11) und dem zweiten Substrat (12) angeordnet ist, wobei die Richtung der Ausrichtung der Flüssigkristallmoleküle, wenn keine Spannung angelegt ist, vertikal bezüglich jeder Substratoberfläche des ersten Substrats (11) und des zweiten Substrats (12) ist;
wobei
zumindest eine der ersten Elektrode (14) und der zweiten Elektrode (15) eine Vielzahl von Öffnungen (18, 18a, 18b, 18e, 18f, 18g) in zumindest einem Bereich aufweist, wobei die erste Elektrode (13) und die zweite Elektrode (14) sich überlappen;
wobei die Vielzahl von Öffnungen (18, 18a, 18b, 18e, 18f, 18g) einen ersten Bereich aufweist, der sich in einer Richtung erstreckt, die schräg eine erste Richtung überkreuzt, und einen zweiten Bereich, der sich in einer zweiten Richtung erstreckt, welche die erste Richtung jeweils in der Draufsicht kreuzt; und
wobei jede von einer Vielzahl von Regionen (31a, 31b, 31f, 31g), dier von drei oder mehr von irgendeiner der Vielzahl von Öffnungen (18, 18a, 18b, 18e, 18f, 18g) umgeben und begrenzt wird, im Wesentlichen Parallelogramm-förmig oder im Wesentlichen Trapez-förmig ist, wobei ein Trapez eine vierseitige Form mit einem Paar von parallelen gegenüberliegenden Seiten ist;
**dadurch gekennzeichnet, dass**
in jeder der Vielzahl von Regionen (31a, 31b, 31f, 31g), die von drei oder mehr von irgendeiner der Vielzahl von Öffnungen (18, 18a, 18b, 18e, 18f, 18g) umgeben und begrenzt ist, eine Ausrichtungstextur geformt ist, in welcher die Flüssigkristallmoleküle in einem 360° Azimuthbereich orientiert sind.

2. Flüssigkristallanzeigevorrichtung nach Anspruch 1, wobei jede der Vielzahl von Öffnungen (18a, 18b) im Wesentlichen L-förmig ist, wobei die jeweiligen einen Endseiten des ersten Bereichs und des zweiten Bereichs in der Draufsicht miteinander verbunden sind.

3. Flüssigkristallanzeigevorrichtung, die Folgendes aufweist:
ein erstes Substrat (11) und ein zweites Substrat (12), die zueinander hinweisend angeordnet sind;
eine erste Elektrode (13), die auf dem ersten Substrat (11) vorgesehen ist; eine zweite Elektrode (14), die auf dem zweiten Substrat (12) vorgesehen ist; und
eine Flüssigkristallschicht (17), die zwischen dem ersten Substrat (11) und dem zweiten Substrat (12) angeordnet ist, wobei die Richtung einer Ausrichtung der Flüssigkristallmoleküle, wenn keine Spannung angelegt ist, vertikal bezüglich jeder Substratoberfläche des ersten Substrats (11) und des zweiten Substrats (12) ist;
wobei
zumindest eine der ersten Elektrode (14) und der zweiten Elektrode (15) eine Vielzahl von Öffnungen (18, 18c, 18d) in zumindest einem Bereich aufweist, wo die erste Elektrode (13) und die zweite Elektrode (14) überlappen;
wobei die Vielzahl von Öffnungen (18c, 18d) einen gebogenen oder gekrümmten ersten Bereich aufweist, der sich entlang einer ersten Richtung erstreckt, und einen zweiten Bereich, der sich in einer zweiten Richtung erstreckt, welche die erste Richtung jeweils in der Draufsicht überkreuzt; und
wobei jede einer Vielzahl von Regionen (31c, 31d, 31e), die durch drei oder mehr von irgendeiner der Vielzahl von Öffnungen (18c, 18d) umgeben und begrenzt ist, im Wesentlichen Parallelogramm-förmig oder im Wesentlichen Trapez-förmig ist, wobei ein Trapez eine viereckige Form mit einem Paar von parallelen gegenüberliegenden Seiten ist;
**dadurch gekennzeichnet, dass** in jeder der Vielzahl von Regionen (31c, 31d und 31e), die durch drei oder mehr von irgendeiner der Vielzahl von Öffnungen (18c, 18d) umgeben und begrenzt ist, eine Ausrichtungstextur geformt ist, in welcher die Flüssigkristallmoleküle in einem 360° Azimuthbereich orientiert sind.

4. Flüssigkristallanzeigevorrichtung nach Anspruch 3, wobei jede der Vielzahl von Öffnungen (18c, 18d) im Wesentlichen T-förmig ist, wobei ein mittlerer Bereich des ersten Bereichs in der ersten Richtung und eine Endseite des zweiten Bereichs in der Draufsicht miteinander verbunden sind.

5. Flüssigkristallanzeigevorrichtung nach Anspruch 1 oder 3, wobei jede der Vielzahl von Regionen (31a-g) einer Ausrichtungsdomäneneinheit entspricht.

6. Flüssigkristallanzeigevorrichtung nach einem der vorhergehenden Ansprüche, wobei
ein erster Ausrichtungsfilm (50) ohne Ausrichtungsbehandlung auf einer Oberflächenseite des ersten Substrats (11) vorgesehen ist, und wobei ein zweiter Ausrichtungsfilm (16) ohne eine Ausrichtungsbehandlung auf einer Oberflächenseite des zweiten Substrats (12) vorgesehen ist.

## Revendications

1. Appareil d'affichage à cristaux liquides comprenant :
un premier substrat (11) et un deuxième substrat (12) disposés en face l'un de l'autre ;
une première électrode (13) prévue sur le premier substrat (11) ;
une deuxième électrode (14) prévue sur le deuxième substrat (12) ; et
une couche de cristaux liquides (17) disposée entre le premier substrat (11) et le deuxième substrat (12) dans lequel la direction d'alignement des molécules de cristal liquide quand une tension n'est pas appliquée est verticale par rapport à chaque surface de substrat du premier substrat (11) et du deuxième substrat (12) ;
dans lequel :
au moins une électrode parmi la première électrode (14) et la deuxième électrode (15) comprend une pluralité d'ouvertures (18, 18a, 18b, 18e, 18f, 18g) dans au moins une région où la première électrode (13) et la deuxième électrode (14) se chevauchent ;
la pluralité d'ouvertures (18, 18a, 18b, 18e, 18f, 18g) comprend une première zone qui s'étend dans une direction qui traverse obliquement une première direction, et une deuxième zone qui s'étend dans une deuxième direction qui traverse la première direction, en vue plane, respectivement ; et
chaque région parmi une pluralité de régions (31a, 31b, 31f, 31g) entourée et délimitée par trois quelconques ouvertures ou plus parmi la pluralité d'ouvertures (18, 18a, 18b, 18e, 18f, 18g) est sensiblement en forme de parallélogramme ou de forme sensiblement trapézoïdale, dans lequel un trapézoïde est un quadrilatère ayant une paire de côtés opposés parallèles ;
**caractérisé en ce que** :
dans chaque région de la pluralité de régions (31a, 31b, 31f, 31g) entourée et délimitée par trois quelconques ouvertures ou plus parmi la pluralité d'ouvertures (18, 18a, 18b, 18e, 18f, 18g), une texture d'alignement est formée dans laquelle les molécules de cristal liquide sont orientées dans une plage d'azimut de 360°.

2. Appareil d'affichage à cristaux liquides selon la revendication 1, dans lequel :
chaque ouverture de la pluralité d'ouvertures (18a, 18b) comprend une forme sensiblement en L selon laquelle les côtés d'extrémité respectifs de la première zone et de la deuxième zone se rejoignent, en vue plane.

3. Appareil d'affichage à cristaux liquides comprenant :
un premier substrat (11) et un deuxième substrat (12) disposés en face l'un de l'autre ;
une première électrode (13) prévue sur le premier substrat (11) ;
une deuxième électrode (14) prévue sur le deuxième substrat (12) ; et
une couche de cristaux liquides (17) disposée entre le premier substrat (11) et le deuxième substrat (12), la direction d'alignement des molécules de cristal liquide quand une tension n'est pas appliquée étant verticale par rapport à chaque surface de substrat du premier substrat 11 et du deuxième substrat 12 ;
dans lequel :
au moins une électrode parmi la première électrode (14) et la deuxième électrode (15) comprend une pluralité d'ouvertures (18, 18c, 18d) dans au moins une région où la première électrode (13) et la deuxième électrode (14) se chevauchent ;
la pluralité d'ouvertures (18c, 18d) comprend une première zone pliée ou incurvée qui s'étend dans une première direction, et une deuxième zone qui s'étend dans une deuxième direction qui traverse la première direction, en vue plane, respectivement ; et
chaque région d'une pluralité de régions (31c, 31d, 31e) entourée et délimitée par trois quelconques ouvertures ou plus parmi la pluralité d'ouvertures (18c, 18d) est sensiblement en forme de parallélogramme ou de forme sensiblement trapézoïdale, dans lequel un trapézoïde est un quadrilatère ayant une paire de côtés opposés parallèles ;
**caractérisé en ce que** :
dans chaque région de la pluralité de régions (31c, 31d, 31e) entourée et délimitée par trois quelconques ouvertures ou plus parmi la pluralité d'ouvertures (18c, 18d), une texture d'alignement est formée dans laquelle les molécules de cristal liquide sont orientées dans une plage d'azimut de 360°.

4. Appareil d'affichage à cristaux liquides selon la revendication 3, dans lequel :
chaque ouverture de la pluralité d'ouvertures (18c, 18d) comprend une forme sensiblement en T dans lequel une zone médiane de la première zone dans la première direction et un côté d'extrémité de la deuxième zone se rejoignent, en vue plane.

5. Appareil d'affichage à cristaux liquides selon l'une quelconque des revendications 1 à 3, dans lequel :
chaque région de la pluralité de régions (31a-g) correspond à une unité de domaine d'alignement.

6. Appareil d'affichage à cristaux liquides selon l'une quelconque des revendications précédentes, dans lequel :
un premier film d'alignement (15) sans traitement d'alignement est prévu sur un côté de surface dudit premier substrat (11) et un deuxième film d'alignement (16) sans traitement d'alignement est prévu sur un côté de surface dudit deuxième substrat (12).
